# EUROPEAN PATENT APPLICATION

(11) **EP 4 492 803 A1**
(43) Date of publication of application: **15.01.2025**
(21) Application number: 23784190.3
(22) Date of filing: 27.03.2023
(51) Int. Cl.: H04N 23/10

(54) **IMAGE SENSOR, IMAGING MODULE, IMAGE COLLECTION DEVICE, AND IMAGE PROCESSING METHOD**

(30) Priority: 08.04.2022 CN 202210364358
(71) Applicant: Huawei Technologies Co., Ltd., Shenzhen, Guangdong 518129 (CN)
(72) Inventor: YANG, Hui, Shenzhen, Guangdong 518129 (CN); LIU, Chang, Shenzhen, Guangdong 518129 (CN); LIU, Shuyang, Tianjin 300308 (CN); ZHANG, Chen, Tianjin 300308 (CN)
(74) Representative: Isarpatent
(86) International application number: PCT/CN2023/084097
(87) International publication number: WO 2023/193626

(57) **Abstract**

This application provides an image sensor, an imaging module, an image capturing device, and an image processing method and device, and relates to the field of machine vision. The image sensor includes: an optical signal obtaining module and a communication interface. The optical signal obtaining module may be configured to obtain an optical signal of a red-green-blue spectral band and an optical signal of a hyperspectral band from a received optical signal, and convert the optical signal of the red-green-blue spectral band and the optical signal of the hyperspectral band into an electrical signal. The optical signal obtaining module includes a first optical structure corresponding to the red-green-blue spectral band and a second optical structure corresponding to the hyperspectral band. The first optical structure is configured to obtain the optical signal of the red-green-blue spectral band from the optical signal, and the second optical structure is configured to obtain the optical signal of the hyperspectral band from the optical signal. The communication interface is configured to output the electrical signal. Based on this solution, there is no need to use two independent devices to respectively obtain a hyperspectral image and a red-green-blue image, which can better meet user requirements.

## Description

This application claims priority to Chinese Patent Application No. 202210364358.7, filed with the China National Intellectual Property Administration on April 08, 2022 and entitled "IMAGE SENSOR, IMAGING MODULE, IMAGE CAPTURING DEVICE, AND IMAGE PROCESSING METHOD", which is incorporated by reference in its entirety.

### TECHNICAL FIELD

This application relates to the field of machine vision, and more specifically, to an image sensor, an imaging module, an image capturing device, and an image processing method and device.

### BACKGROUND

Hyperspectral imaging technology has been widely applied to the fields of Earth observation, biometric measurement, and food safety. Hyperspectral imaging generally has four manners: point scanning, line scanning, spectral scanning, and snapshot imaging. In point scanning imaging, information of one pixel is obtained at a time. In this method, a spectral resolution is very high, but a large amount of time is consumed to capture an image. In spectral scanning imaging, entire spatial information of one wavelength is obtained at a time. Although a speed of generating an image for each wavelength is high, a large amount of time is still consumed to finally obtain an imaging result due to a need to change to different wavelengths for scanning. In snapshot imaging, information of a plurality of wavelengths may be obtained at a time, but a spectrum and a resolution that may be identified in this manner are very limited. In line scanning imaging, information about a plurality of wavelengths on a line may be obtained at a time. Compared with point scanning imaging, line scanning imaging is faster, and is simpler in hardware implementation. Line scanning imaging is widely applied to hyperspectral imaging in moving scenarios, such as uncrewed aerial vehicles or conveyor belts.

Currently, a line scanning spectrometer can only obtain hyperspectral images. This cannot meet user requirements in many scenarios.

### SUMMARY

This application provides an image sensor, an imaging module, an image capturing device, and an image processing method and device. A hyperspectral image and a red-green-blue (red-green-blue, RGB) image may be simultaneously obtained by using one device, which can better meet user requirements.

According to a first aspect, this application provides an image sensor, including an optical signal obtaining module and a communication interface. The optical signal obtaining module is configured to obtain an optical signal of an RGB spectral band and an optical signal of a hyperspectral band from a received optical signal, and convert the optical signal of the RGB spectral band and the optical signal of the hyperspectral band into an electrical signal. The optical signal obtaining module includes a first optical structure corresponding to the RGB spectral band and a second optical structure corresponding to the hyperspectral band. The first optical structure is configured to obtain the optical signal of the RGB spectral band from the optical signal, and the second optical structure is configured to obtain the optical signal of the hyperspectral band from the optical signal. The communication interface is configured to output the electrical signal.

The image sensor provided in this application may obtain, from the received optical signal, and output the optical signal of the hyperspectral band and the optical signal of the RGB spectral band, to facilitate simultaneous obtaining of a hyperspectral image and an RGB image during line scanning. Therefore, one image sensor may simultaneously obtain the hyperspectral image and the RGB image without a need for two independent devices (for example, a line scanning spectrometer and an RGB camera) to respectively obtain the hyperspectral image and the RGB image. Therefore, in an image capturing process, the optical signal of the hyperspectral band and the optical signal of the RGB spectral band may be simultaneously obtained by using the first optical structure and the second optical structure, to obtain an image of the hyperspectral band and an image of the RGB spectral band, which can better meet user requirements. In addition, because an image is captured by using a same device, and in a capturing process, the optical signal of the hyperspectral band and the optical signal of the RGB spectral band are simultaneously obtained by using the first optical structure and the second optical structure, the hyperspectral image and the RGB image are aligned in a capturing time. Therefore, image processing complexity can be reduced. In addition, because there is no need to add the RGB camera to the line scanning spectrometer to capture the RGB image, that is, the hyperspectral image and the RGB image may be simultaneously obtained by using one independent device, hardware costs can be reduced.

With reference to the first aspect, in some possible implementations of the first aspect, the first optical structure includes a light filtering structure, and the second optical structure includes a light splitting structure. The light splitting structure is configured to split the optical signal to obtain the optical signal of the hyperspectral band. The light filtering structure is configured to filter the optical signal to obtain the optical signal of the RGB spectral band.

With reference to the first aspect, in some possible implementations of the first aspect, both the first optical structure and the second optical structure include a light filtering structure, and the light filtering structure is configured to filter the optical signal, to obtain the optical signal of the hyperspectral band and the optical signal of the RGB spectral band.

Both the light splitting structure and the light filtering structure provided in this application filter the obtained optical signal, so that an optical signal irradiated to a corresponding region of a photosensitive element is an optical signal of a corresponding spectral band. The photosensitive element provided in this application may be configured to sense optical signals of a plurality of spectral bands, to generate the hyperspectral image and the RGB image.

Optionally, the light splitting structure includes one or more of the following: an interference thin film, a Fabry-Perot cavity, a waveguide grating, a nano-hole, or a metal medium.

All the optical structures listed above may generate light splitting effect on the optical signal, and split the optical signal into optical signals corresponding to the hyperspectral band.

Optionally, the RGB spectral band includes a plurality of spectral sub-bands, and regions that are in the light filtering structure and that correspond to the plurality of spectral sub-bands are arranged in a Bayer pattern.

Optionally, the RGB spectral band includes a plurality of spectral sub-bands, a region that is in the light filtering structure and that corresponds to the spectral sub-bands is strip-shaped, and regions corresponding to different spectral sub-bands are arranged in parallel in a scanning direction.

In the light filtering structure provided in this application, the region corresponding to each spectral sub-band may be strip-shaped, and the regions corresponding to different spectral sub-bands are arranged in parallel in the scanning direction, to facilitate line scanning performed by the image sensor on a target object. Alternatively, regions corresponding to the hyperspectral band may be strip-shaped, and the regions corresponding to different spectral sub-bands are arranged in parallel in the scanning direction, and regions corresponding to the red-green-blue spectral band are arranged in a Bayer pattern, to facilitate generation of the red-green-blue image.

Optionally, the light filtering structure is prepared by using a chemical dye.

The chemical dye may produce light filtering effect on the optical signal, and filter the optical signal into optical signals of corresponding spectral bands.

Optionally, the first optical structure and the second optical structure are located in different planes, or are located in a same plane.

Optionally, the optical signal obtaining module further includes the photosensitive element, configured to sense the optical signals received from the first optical structure and the second optical structure, to obtain the electrical signal.

Optionally, the hyperspectral band includes a visible spectral band or an infrared spectral band.

According to a second aspect, this application provides an imaging module. The imaging module includes: an imaging lens and an image sensor.

According to a third aspect, this application provides an image capturing device. The image capturing device includes an imaging module.

With reference to the third aspect, in some implementations of the third aspect, the image capturing device further includes a controller, configured to control an optical signal obtaining module to perform line scanning on a target object in a preset scanning direction, to obtain images of a plurality of scanning regions of the target object.

According to a fourth aspect, this application provides an image processing method. The method includes: obtaining a first image sequence and a second image sequence, where the first image sequence includes a plurality of images that are of a red-green-blue spectral band and that are captured by performing line scanning on a target object, and the second image sequence includes a plurality of images that are of a hyperspectral band and that are captured by performing line scanning on the target object; and
performing image splicing on the second image sequence based on at least one transformation relationship, to obtain a spliced image that is of the target object and that is in the hyperspectral band, where the at least one transformation relationship is obtained based on image splicing performed on the first image sequence, and the at least one transformation relationship indicates a transformation relationship between two images in the first image sequence.

According to the image processing method provided in this application, an image sequence of the RGB spectral band may be obtained, and a spliced image that is of the target object and that is in the RGB spectral band and a transformation relationship used for image splicing are obtained based on the image sequence of the RGB spectral band. Then, images of an image sequence of another spectral band are spliced based on the transformation relationship for image splicing of the RGB spectral band. Because a current image processing algorithm has better effect in calculating a transformation relationship of RGB image splicing than in calculating a transformation relationship of hyperspectral image splicing, the transformation relationship for splicing of the RGB image is reused for splicing of the hyperspectral image. This can reduce a calculation amount, and can also make splicing effect of the hyperspectral image better.

With reference to the fourth aspect, in some possible implementations of the fourth aspect, before the performing image splicing on the second image sequence based on a transformation relationship between images, the method further includes: performing image splicing on the first image sequence to obtain the at least one transformation relationship.

The following provides three possible implementations as examples.

In a first possible implementation, the second image sequence includes a first image, a second image, and a third image. The at least one transformation relationship includes a first transformation relationship and a second transformation relationship. The performing image splicing on the second image sequence based on at least one transformation relationship, to obtain a spliced image that is of the target object and that is in the hyperspectral band includes: performing image splicing on the third image and a fourth image based on the first transformation relationship, to obtain the spliced image that is of the target object and that is in the hyperspectral band. The fourth image is obtained by performing image splicing on the first image and the second image based on the second transformation relationship.

It should be understood that the spliced image obtained by performing image splicing on the third image and the fourth image may be a finally obtained spliced image, or may be a spliced image obtained in an intermediate step. However, it may be understood that the spliced image that is of the target object and that is in the hyperspectral band may be obtained through one or more iterations.

For example, the second image sequence includes T images. The T images are in a one-to-one correspondence with T capturing times. A first image in the T images is captured at a first capturing time in the T capturing times. A t^{th} image in the T images is captured at a t^{th} capturing time in the T capturing times. The at least one transformation relationship includes T-1 transformation relationships. A first transformation relationship in the T-1 transformation relationships is used for image splicing of a second image and the first image in the T images. A t^{th} transformation relationship in the T-1 transformation relationships is used for image splicing of a (t+1)^{th} image in the T images and a (t-1)^{th} spliced image. The (t-1)^{th} spliced image is obtained based on image splicing performed on first t-1 images in the T images, where 1<t<T, T> 1, and both t and T are integers.

This implementation may be used in a real-time image splicing scenario. When the target object is scanned, a transformation relationship of image splicing may be obtained while images are spliced into a final spliced image.

In a second possible implementation, the second image sequence includes a first image, a second image, and a third image. The at least one transformation relationship includes a first transformation relationship and a second transformation relationship. The performing image splicing on the second image sequence based on at least the transformation relationship, to obtain a spliced image that is of the target object and that is in the hyperspectral band includes: performing image splicing on the first image and the second image based on the first transformation relationship, and performing image splicing on the second image and the third image based on the second transformation relationship, to obtain the spliced image that is of the target object and that is in the hyperspectral band.

It should be understood that the spliced image obtained by splicing the second image and the third image may be a finally obtained spliced image, or may be a spliced image obtained in an intermediate step. However, it may be understood that, based on splicing of every two adjacent images in the second image sequence, the spliced image that is of the target object and that is in the hyperspectral band may be finally obtained.

For example, the second image sequence includes T images. The T images are in a one-to-one correspondence with T capturing times. The at least one transformation relationship includes a t^{th} transformation relationship. The t^{th} transformation relationship is used as a transformation relationship between a t^{th} image and a (t+1)^{th} image in the T images, where 1≤t<T, T> 1, and both t and T are integers.

This implementation may be used in an offline image splicing scenario. First, scanning is performed on the target object once to obtain images arranged in a time sequence. Then, a transformation relationship between two adjacent images is calculated. Finally, a spliced image that is of the target object and that is in a red-green-blue spectral band is obtained.

In the foregoing first and second implementations, the first image, the second image, and the third image are arranged in a capturing time sequence.

In a third possible implementation, the at least one transformation relationship includes a first transformation relationship. The performing image splicing on the second image sequence based on at least one transformation relationship, to obtain a spliced image that is of the target object and that is in the hyperspectral band includes: obtaining two images, in the second image sequence, whose matching degree reaches a preset threshold; and performing, based on the first transformation relationship, image splicing on the two images, in the second image sequence, whose matching degree reaches the preset threshold, to obtain the spliced image that is of the target object and that is in the hyperspectral band.

It should be understood that the spliced image obtained based on the first transformation relationship herein may be a finally obtained spliced image, or may be a spliced image obtained in an intermediate step. However, it may be understood that two images whose matching degree reaches the preset threshold are obtained from the second image sequence for a plurality of times, so that more images can be spliced, to obtain the spliced image that is of the target object and that is in the hyperspectral band.

For example, the first image sequence includes N images, and each of the at least one transformation relationship is a transformation relationship between two images, in the N images, whose matching degree reaches the preset threshold.

In the third implementation, optionally, the second image sequence is obtained by performing a plurality of rounds of line scanning on the target object in a scanning direction.

This implementation may be used in a scenario of a plurality of rounds of scanning. In this scenario, an image whose matching degree with a specific image reaches the preset threshold is not necessarily an image that is closest to the image in terms of time. Therefore, the images may be preferably selected for splicing by calculating a matching degree. This helps improve splicing effect of the images.

According to a fifth aspect, this application provides an image processing device, including modules or units configured to implement the method in any one of the fourth aspect or the possible implementations of the fourth aspect. It should be understood that the modules or units may implement corresponding functions by executing a computer program.

According to a sixth aspect, this application provides an image processing device, including a memory and a processor, where the memory may be configured to store a computer program. The processor may be configured to invoke and execute instructions stored in the memory, to implement the image processing method according to any one of the fourth aspect or the possible implementations of the fourth aspect. The device may further include a communication interface. The communication interface is configured for the device to communicate with another device. For example, the communication interface may be a transceiver, a circuit, a bus, a module, or another type of communication interface.

According to a seventh aspect, this application provides a chip system. The chip system includes at least one processor, configured to support implementation of a function according to any one of the fourth aspect or the possible implementations of the fourth aspect, for example, receiving or processing of data and/or information in the foregoing method.

In a possible design, the chip system further includes a memory. The memory is configured to store program instructions and data. The memory is located inside the processor or outside the processor.

The chip system may include a chip, or may include a chip and another discrete component.

According to an eighth aspect, this application provides a computer-readable storage medium, including a computer program. When the computer program is run on a computer, the computer is enabled to implement the method in any one of the fourth aspect or the possible implementations of the fourth aspect.

According to a ninth aspect, this application provides a computer program product. The computer program product includes: a computer program (or may be referred to as code or instructions). When the computer program is run, the computer is enabled to perform the method in any one of the fourth aspect or the possible implementations of the fourth aspect.

### BRIEF DESCRIPTION OF DRAWINGS

FIG. 1(a) and FIG. 1(b) are a diagram of a line scanning scenario according to an embodiment of this application;
FIG. 2 is a diagram of a structure of an image sensor according to an embodiment of this application;
FIG. 3 is a diagram of a possible structure of an optical signal obtaining module according to an embodiment of this application;
FIG. 4 is a diagram of another possible structure of an optical signal obtaining module according to an embodiment of this application;
FIG. 5 is a diagram of a possible structure of a light splitting structure or a light filtering structure according to an embodiment of this application;
FIG. 6 is a diagram of another possible structure of a light splitting structure or a light filtering structure according to an embodiment of this application;
FIG. 7 is a schematic flowchart of an image processing method according to an embodiment of this application;
FIG. 8A, FIG. 8B, FIG. 9, and FIG. 10 are diagrams of three possible implementations of image splicing and transformation relationship determining according to an embodiment of this application; and
FIG. 11 and FIG. 12 are block diagrams of an image processing device according to an embodiment of this application.

### DESCRIPTION OF EMBODIMENTS

To make objectives, technical solutions, and advantages of embodiments of this application clearer, the following clearly and completely describes the technical solutions in embodiments of this application with reference to the accompanying drawings in embodiments of this application. It is clear that the described embodiments are some rather than all of embodiments of this application.

Therefore, the following detailed descriptions of embodiments of this application provided in the accompanying drawings are not intended to limit the scope of this application, but merely to represent selected embodiments of this application. All other embodiments obtained by a person of ordinary skill in the art based on embodiments of this application without creative efforts shall fall within the protection scope of this application.

In embodiments of this application, the terms "first", "second", and the like are intended to distinguish between similar objects but do not necessarily indicate a specific order or sequence. Further, the term "include" and any variation thereof are intended to cover a non-exclusive inclusion.

The following describes technical solutions in this application with reference to the accompanying drawings.

For ease of understanding of embodiments of this application, the following descriptions are provided first.

First, for ease of understanding, the following describes in detail an image sensor and an image capturing device provided in this application with reference to a plurality of accompanying drawings. However, these accompanying drawings are merely examples for ease of understanding, and relative distances between components shown in the figures, and shapes and sizes of the components are not necessarily the same as physical objects or are not necessarily scaled proportionally.

Second, the following plurality of accompanying drawings show only devices related to embodiments of this application, and do not limit other devices and a quantity of other devices included in the image sensor and the image capturing device.

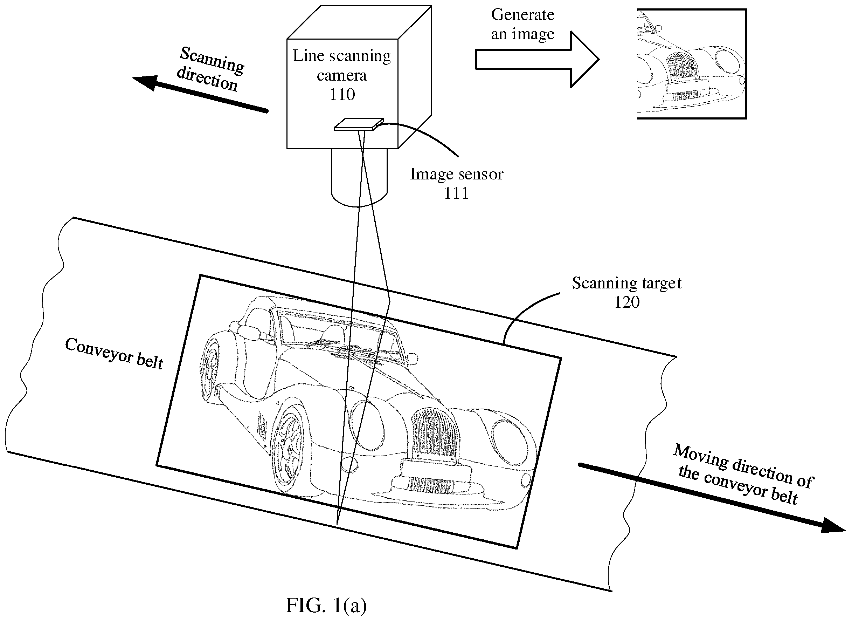

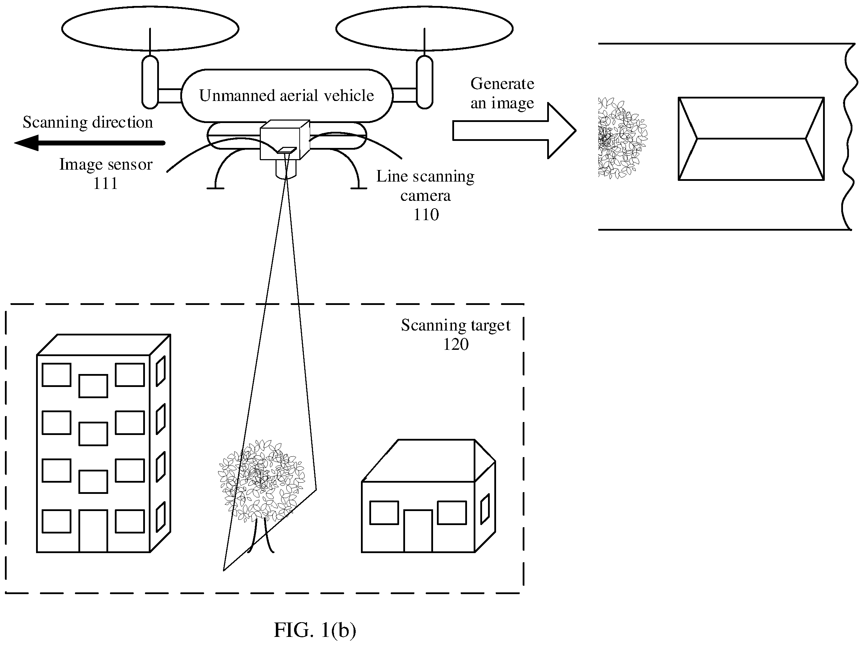

FIG. 1(a) and FIG. 1(b) are a diagram of a line scanning scenario according to an embodiment of this application. As shown in FIG. 1(a), this scenario shows a line scanning camera 110, an image sensor 111, and a scanning target 120. The line scanning camera 110 is an image capturing device, and may perform line scanning on the scanning target 120 in a preset scanning direction, to generate a spliced image of the scanning target 120. The scanning target 120 may be a planar target, for example, a picture or a drawing, as shown in FIG. 1(a); or may be a stereoscopic target, for example, a house or a tree, as shown in FIG. 1(b).

The line scanning camera 110 performs line scanning on the scanning target 120 in the preset scanning direction. The line scanning camera 110 may be static, and the scanning target 120 moves in an opposite direction of the preset scanning direction. As shown in FIG. 1(a), in a conveyor belt scenario, the line scanning camera 110 is fastened above the conveyor belt, and the scanning target 120 moves in a moving direction of the conveyor belt. In this case, the scanning direction is an opposite direction of the moving direction of the conveyor belt. Alternatively, the scanning target 120 may be static, and the line scanning camera 110 moves in the preset scanning direction. As shown in FIG. 1(b), in an uncrewed aerial vehicle scenario, the line scanning camera 110 is mounted on the uncrewed aerial vehicle, moves in the preset scanning direction, and scans the scanning target 120.

Current line scanning spectrometers can only obtain a hyperspectral image. In many scenarios, an RGB image needs to be obtained while the hyperspectral image is obtained. Therefore, how to simultaneously obtain the hyperspectral image and the RGB image becomes a problem that needs to be resolved.

In view of this, this application provides an image sensor. An RGB light filtering structure is added to a sensor of a line scanning spectrometer, so that a line scanning camera on which this image sensor is mounted can simultaneously obtain a hyperspectral image and an RGB image in a scanning process.

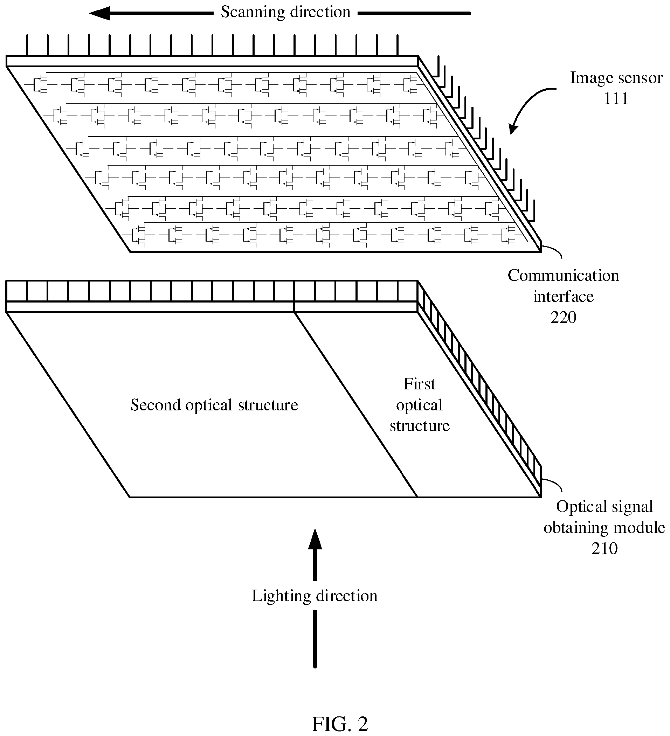

FIG. 2 is a diagram of a structure of an image sensor according to an embodiment of this application. As shown in FIG. 2, the image sensor 111 includes an optical signal obtaining module 210 and a communication interface 220. The optical signal obtaining module 210 may be configured to obtain an optical signal of an RGB spectral band and an optical signal of a hyperspectral band from a received optical signal, and convert the optical signal of the RGB spectral band and the optical signal of the hyperspectral band into an electrical signal. Specifically, the optical signal obtaining module 210 includes a first optical structure corresponding to the RGB spectral band and a second optical structure corresponding to the hyperspectral band. The first optical structure is configured to obtain the optical signal of the RGB spectral band from the optical signal, and the second optical structure is configured to obtain the optical signal of the hyperspectral band from the optical signal. The communication interface 220 may be a circuit board with pins, and may be configured to output the electrical signal, for example, output the electrical signal to a processor, so that the processor generates an image based on the electrical signal.

The hyperspectral band includes a visible spectral band or an infrared spectral band. More specifically, a resolution of the hyperspectral band to a spectrum may reach an order of magnitude of one percent of a wavelength, and a resolvable spectral width is only several nanometers. Although the RGB spectral band is also a visible spectral band, a resolution of the spectral band is far less refined than that of the hyperspectral band. Generally, a resolution of the RGB spectral band to the spectrum can reach only an order of magnitude of one tenth of a wavelength, for example, a wavelength range of red light is between 622 nanometers and 780 nanometers, a wavelength range of green light is between 492 nanometers and 577 nanometers, and a wavelength range of blue light is between 455 nanometers and 492 nanometers, and a resolvable spectral width is dozens or even hundreds of nanometers.

A function of the second optical structure for obtaining the optical signal of the hyperspectral band may be implemented by using a light splitting structure or a light filtering structure. The light splitting structure may be configured to split the optical signal to obtain the optical signal of the hyperspectral band; and the light filtering structure may be configured to filter the optical signal to obtain the optical signal of the hyperspectral band. A function of the first optical structure for obtaining the optical signal of the RGB spectral band may be implemented by using the light filtering structure, and the light filtering structure is configured to filter the obtained optical signal, to obtain the optical signal of the RGB spectral band.

Optionally, the light splitting structure includes one or more of the following: an interference thin film, a Fabry-Perot cavity, a waveguide grating, a nano-hole, or a metal medium.

The light splitting structure splits a beam of mixed light that includes a plurality of spectral bands into a plurality of beams of light, where each beam of light includes only one spectral sub-band, and each beam of light of each spectral sub-band irradiates to different regions of a photosensitive element.

Optionally, the light filtering structure is prepared by using a chemical dye.

A region of each spectral sub-band in the light filtering structure allows only light of a corresponding spectral sub-band to pass through, and light of another spectral band is absorbed by the chemical dye and is filtered out.

It should be understood that the foregoing specific implementations of the light splitting structure and the light filtering structure are merely examples, and this application includes but is not limited thereto.

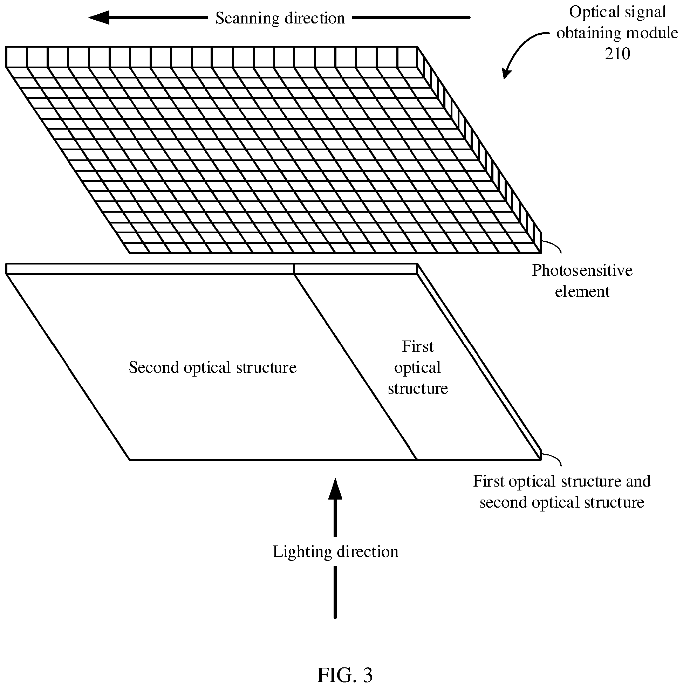

As shown in FIG. 3, in addition to the first optical structure and the second optical structure, the optical signal obtaining module 210 further includes the photosensitive element. The photosensitive element is configured to sense optical signals received from the light splitting structure or the light filtering structure, to obtain optical signals of a plurality of spectral bands. The photosensitive element may be a charge-coupled device (charge-coupled device, CCD), a complementary metal oxide semiconductor (complementary metal oxide semiconductor, CMOS), or the like. This application includes but is not limited thereto. The photosensitive element may be made of a semiconductor material with high sensitivity, and includes many photosensitive units, that is, pixels. Light first passes through the light splitting structure or the light filtering structure and then irradiates to the photosensitive element, and light irradiating to each pixel of the photosensitive element is light that is of a corresponding spectral band and that is obtained after light splitting or light filtering.

Therefore, a pixel that is in the photosensitive element and that corresponds to a spectral band can sense only light intensity of the spectral band. In other words, a pixel corresponding to a red spectral band can sense only light intensity of the red spectral band; a pixel corresponding to a green spectral band can sense only light intensity of the green spectral band; and a pixel corresponding to a blue spectral band can sense only light intensity of the blue spectral band.

When a surface of the photosensitive element is irradiated by light, each pixel generates a charge under excitation of a photon, and a quantity of charges is related to light intensity. Stronger light indicates more excited charges. Therefore, the photosensitive element may sense light intensity at the pixel by measuring an electrical signal of each pixel. The processor may further generate an image based on the electrical signal of each pixel.

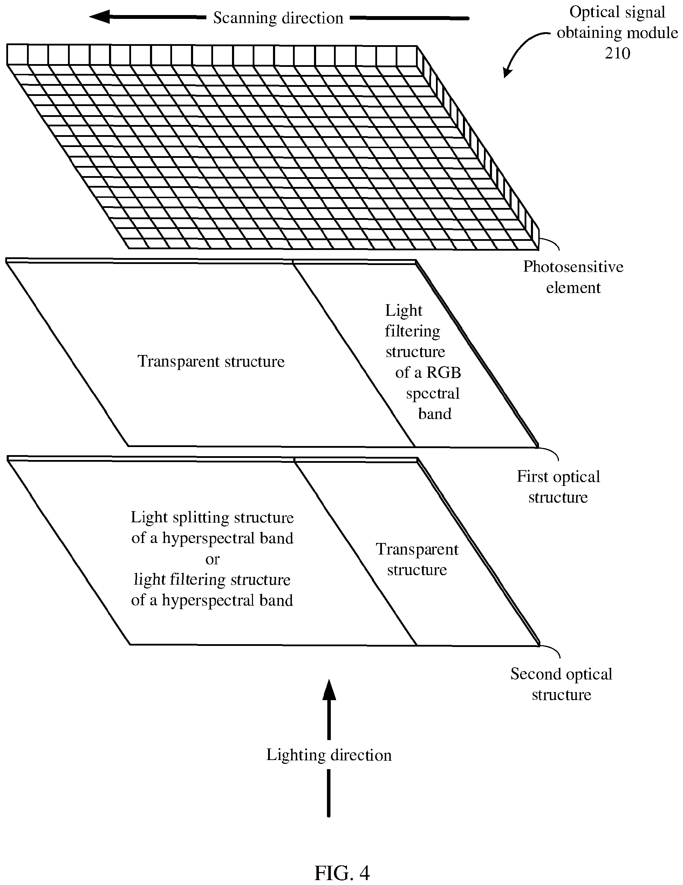

The first optical structure and the second optical structure shown in FIG. 3 are located in a same plane. In addition, as shown in FIG. 4, the first optical structure and the second optical structure may alternatively be located in different planes.

The second optical structure includes a light splitting structure of the hyperspectral band or a light filtering structure of the hyperspectral band, and a transparent structure. The light splitting structure of the hyperspectral band or the light filtering structure of the hyperspectral band may be configured to split or filter the optical signal to obtain the optical signal corresponding to the hyperspectral band. The transparent structure allows the optical signal to pass without loss to irradiate to the first optical structure.

The first optical structure includes a transparent structure and a light filtering structure of the RGB spectral band. The transparent structure allows the optical signal that is obtained after light splitting or light filtering performed by the second optical structure and that corresponds to the hyperspectral band to pass without loss. The light filtering structure of the RGB spectral band may be configured to filter the optical signal, to obtain the optical signal corresponding to the RGB spectral band.

The transparent structure is, for example, optical glass plated with an anti-reflective coating, or another optical structure that allows an optical signal to pass without loss. This is not limited in this application.

It should be understood that FIG. 4 is merely an example, and locations of the first optical structure and the second optical structure in FIG. 4 may be exchanged. This is not limited in this application.

In this embodiment of this application, two solutions are provided for arrangement manners that are of the first optical structure and the second optical structure and that correspond to different spectral bands.

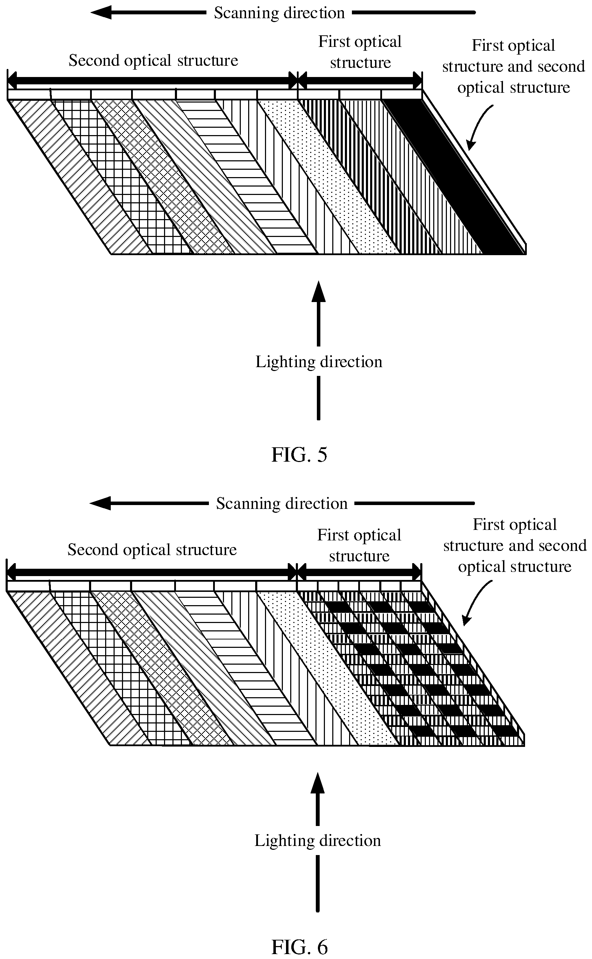

In a solution shown in FIG. 5, a region of each spectral band in the first optical structure and the second optical structure is strip-shaped, and regions corresponding to different spectral bands are arranged in parallel in a scanning direction. In another solution shown in FIG. 6, a region of each spectral band in the second optical structure is strip-shaped, regions corresponding to different spectral bands are arranged in parallel in the scanning direction, and regions of the first optical structure are arranged in a Bayer pattern.

The strip shape indicates a narrow and long shape with two sides that are parallel or approximately parallel, for example, a rectangle in FIG. 5 and FIG. 6. It should be understood that the strip shape is not limited to the rectangle, and may alternatively be a parallelogram, a trapezoid, a shape with a radian on two sides, a shape with sawteeth on two sides, or the like. This is not limited in this application.

It should be further understood that, regardless of an arrangement manner of the regions of the first optical structure, the regions of the first optical structure may be considered as a whole.

It should be further understood that FIG. 5 and FIG. 6 are merely diagrams, and a quantity of spectral band regions in the second optical structure is not limited, a spectral frequency and a half-wave width of each spectral band in the second optical structure are not limited, and a pixel range covered by each spectral band region in a hyperspectral band region and an RGB spectral band region is not limited.

For example only, the image sensor is a quarter video graphics array (quarter video graphics array, QVGA) sensor with a resolution of 320*240 pixels. A region covered by the second optical structure is 224*240 pixels, and a region covered by the first optical structure is 96*240 pixels. There are seven spectral band regions in the region covered by the second optical structure, and a pixel range covered by each spectral band region is 32*240 pixels. When the region covered by the first optical structure is arranged in a linear manner, a pixel range covered by a spectral band region of each color is 32*240 pixels. When the region covered by the first optical structure is arranged in a Bayer pattern, a pixel range covered by a grid of a spectral band of each color is 16*16 pixels.

In an RGB image, each pixel includes information of three colors RGB.

For a solution in which the region covered by the first optical structure is arranged in a strip shape, and regions corresponding to different spectral bands are arranged in parallel in the scanning direction, to generate an RGB image based on an electrical signal generated by pixels corresponding to the region covered by the first optical structure, three images, that is, a red image corresponding to a red spectral band region, a green image corresponding to a green spectral band region, and a blue image corresponding to a blue spectral band region, may be combined into one RGB image according to a simple superposition algorithm.

For a solution in which the region covered by the first optical structure is arranged in a Bayer pattern, to generate an RGB image based on an electrical signal generated by pixels corresponding to the region covered by the first optical structure, the RGB image may be generated through calculation according to a demosaicing algorithm.

Based on the foregoing solution, one image sensor may simultaneously obtain the hyperspectral image and the RGB image without a need for two independent devices (for example, a line scanning spectrometer and an RGB camera) to respectively obtain the hyperspectral image and the RGB image. Therefore, in an image capturing process, the optical signal of the hyperspectral band and the optical signal of the RGB spectral band may be simultaneously obtained by using the first optical structure and the second optical structure, to obtain an image of the hyperspectral band and an image of the RGB spectral band, which can better meet user requirements. In addition, because an image is captured by using a same device, and in a capturing process, the optical signal of the hyperspectral band and the optical signal of the RGB spectral band are simultaneously obtained by using the first optical structure and the second optical structure, the hyperspectral image and the RGB image are aligned in a capturing time. Therefore, image processing complexity can be reduced. In addition, because there is no need to add the RGB camera to the line scanning spectrometer to capture the RGB image, that is, the hyperspectral image and the RGB image may be simultaneously obtained by using one independent device, hardware costs can be reduced.

In addition to the image sensor, an embodiment of this application further provides an imaging module, including an imaging lens and an image sensor.

For example, the line scanning camera 110 in FIG. 1(a) includes the image sensor 111 and the imaging lens that is not shown in the figure. The imaging lens is configured to image the scanning target 120 on the image sensor 111.

An embodiment of this application further provides an image capturing device, including an imaging module. The image capturing device further includes a controller, configured to control an optical signal obtaining module to perform line scanning on a target object in a preset scanning direction, to obtain images of a plurality of scanning regions of the target object.

For example, in FIG. 1(a), the image capturing device is a conveyor belt device on which the line scanning camera 110 is mounted, and the controller may control the conveyor belt to move at a specific rate, so that the line scanning camera 110 performs line scanning on the scanning target 120.

For another example, in FIG. 1(b), the image capturing device is an uncrewed aerial vehicle on which the line scanning camera 110 is mounted, and the controller may control the uncrewed aerial vehicle to move at a specific rate, so that the line scanning camera 110 performs line scanning on the scanning target 120.

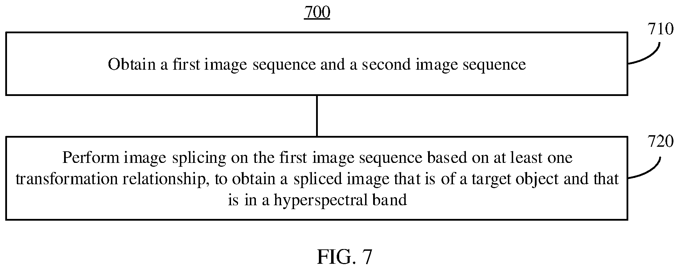

FIG. 7 is a schematic flowchart of an image processing method according to an embodiment of this application. The image processing method shown in FIG. 7 may be performed by an image processing device. The image processing device and an image capturing device may be deployed together, or may be deployed separately, and there is a communication connection between the image processing device and the image capturing device. This is not limited in this application. The image capturing device may include, for example, the image sensor described above with reference to FIG. 2 to FIG. 6. The image sensor may be configured in the conveyor belt device shown in FIG. 1(a) or the uncrewed aerial vehicle shown in FIG. 1(b). Certainly, the image capturing device may also be a device in another form. For example, an RGB camera is additionally added next to the line scanning camera shown in FIG. 1(a). The line scanning camera is configured to capture an image sequence of a hyperspectral band, and the RGB camera is configured to capture an image sequence of an RGB spectral band. This application includes but is not limited thereto.

The method 700 shown in FIG. 7 may include steps 710 to 720. The following describes the steps in the method 700 in detail.

Step 710: Obtain a first image sequence and a second image sequence.

The first image sequence includes a plurality of images that are of the red-green-blue spectral band and that are captured by performing line scanning on a target object, and the second image sequence includes a plurality of images that are of the hyperspectral band and that are captured by performing line scanning on the target object.

The first image sequence may be captured by performing line scanning on the target object at a plurality of capturing times, and the second image sequence may also be obtained by performing line scanning on the target object at a plurality of capturing times. In addition, the plurality of capturing times of the first image sequence and the plurality of capturing times of the second image sequence are in a one-to-one correspondence and aligned.

For example, the first image sequence is denoted as a set P, the second image sequence is denoted as a set Q, P includes images p₁, p₂, p₃, ..., and p_{N}, and Q includes images q₁, q₂, q₃, ..., and q_{N}. In this case, pi and qi are two images captured at a same capturing time, p₂ and q₂ are two images captured at a same capturing time, and by analogy, two images captured in each of N capturing times may be obtained, where N>1, and N is an integer.

It can be learned that the first image sequence and the second image sequence include a plurality of images that are respectively aligned at a plurality of capturing times. However, it should be understood that a quantity of images included in each image sequence is not limited in this application, that is, a quantity of capturing times is not limited.

Because both the first image sequence and the second image sequence may be used for image splicing, to obtain a spliced image that is of the target object and that is in each spectral band. However, it is better that two images used for image splicing have a specific overlap, for example, an overlap of at least 2*240 pixels. This helps prevent a blank gap or other information loss from occurring in the spliced image, and helps integrity of image splicing. If one round of line scanning performed on the target object cannot ensure that there is a specific overlap between two images used for image splicing, a plurality of rounds of line scanning may be performed on the target object. Therefore, the first image sequence and the second image sequence may include a plurality of images captured through one or more rounds of line scanning. In other words, the N capturing times may be a plurality of capturing times in one or more rounds of line scanning.

It should be noted that "one round of line scanning" herein specifically indicates that line scanning starts from one end of the target object in a preset scanning direction, and continues until the other end of the target object is reached. After one round of linear scanning, both the first image sequence and the second image sequence may include a plurality of images corresponding to a plurality of same capturing times.

For example, in FIG. 1(a), the line scanning camera 110 starts line scanning from the right end of the scanning target 120, and continues until the left end of the scanning target 120 is reached. In a line scanning process, the line scanning camera 110 photographs images that are of the scanning target 120 and that are in a plurality of spectral bands at each capturing time. After one round of linear scanning, the first image sequence and the second image sequence of the scanning target 120 are obtained.

Step 720: Perform image splicing on the second image sequence based on at least one transformation relationship, to obtain a spliced image that is of the target object and that is in the hyperspectral band.

The at least one transformation relationship is obtained based on image splicing performed on the first image sequence, and the at least one transformation relationship indicates a transformation relationship between two images in the first image sequence.

As described above, the first image sequence and the second image sequence include the plurality of images obtained by performing line scanning on the target object at the plurality of same capturing times. Therefore, image splicing may be performed on an image sequence of another spectral band based on a transformation relationship between images in an image sequence of one spectral band.

Because a current image processing algorithm has better effect in calculating a transformation relationship of RGB image splicing than in calculating a transformation relationship of hyperspectral image splicing, the transformation relationship for splicing of the first image sequence is reused for splicing of the second image sequence. This can reduce a calculation amount, and can also make splicing effect of the second image sequence better.

Therefore, before image splicing is performed on the second image sequence, splicing needs to be first performed on the first image sequence, to obtain the at least one transformation relationship.

It should be noted that, as described above with reference to FIG. 5 and FIG. 6, the region covered by the first optical structure may be arranged in a linear shape, or may be arranged in a Bayer pattern. Therefore, the first image sequence may be an RGB image sequence synthesized according to a simple superposition algorithm, or may be an RGB image sequence generated through calculation according to a demosaicing algorithm. This is not limited in this application.

A transformation relationship between two images may be obtained according to an image processing algorithm, for example, a scale-invariant feature transform (scale-invariant feature transform, SIFT) algorithm or a speeded robust feature (speeded up robust feature, SURF) algorithm. A specific algorithm to be used is not limited in this application.

Based on the image processing algorithm, a process of obtaining the transformation relationship between the two images is roughly as follows: Pre-processing, such as filtering and noise reduction, is first performed on the images. Then, image registration is performed, feature points are separately extracted from the two images, then a feature value is assigned to each feature point, and then a Euclidean distance of a feature value of each feature point on the two images is calculated. If a Euclidean distance between feature values of two feature points is closest, and a ratio of the Euclidean distance to a next closest Euclidean distance is less than a predefined threshold, the two feature points are matching points. All matching points on the two images are determined, and the transformation relationship between the two images is obtained through calculation based on locations of the matching points.

After the transformation relationship between the two images is obtained, image splicing may be performed, and the two images are spliced into one spliced image. In image splicing, an image fusion algorithm needs to be used to eliminate an accumulated error caused by image splicing or local distortion caused by image transformation, so that image splicing is more natural.

The following provides examples of several possible implementations of performing image splicing on the second image sequence based on the at least one transformation relationship.

In a first possible implementation, the second image sequence includes T images arranged in a capturing time sequence, the T images are in a one-to-one correspondence with T capturing times, and a t^{th} image in the T images is captured at a t^{th} capturing time in the T capturing times. The image processing device may use two images as a group based on the capturing time sequence, and splice the images based on a transformation relationship between the two images. A first group of images may include a first image and a second image in the first image sequence, and image splicing is performed on the first group of images based on a transformation relationship between the first group of images to obtain a first spliced image; then, the first spliced image and a third image in the first image sequence may be used as a second group of images to perform image splicing based on a transformation relationship of the second group of images to obtain a second spliced image; and the rest may be deduced by analogy until image splicing of all images in the first image sequence is completed. In this way, a t^{th} transformation relationship is used for image splicing of a (t+1)^{th} image in the T images and a (t-1)^{th} spliced image, the (t-1)^{th} spliced image is obtained by performing image splicing on first t images in the T images, and a (T-1)^{th} spliced image obtained by performing image splicing on the T images is a spliced image, where 1<t<T, T> 1, and both t and T are integers.

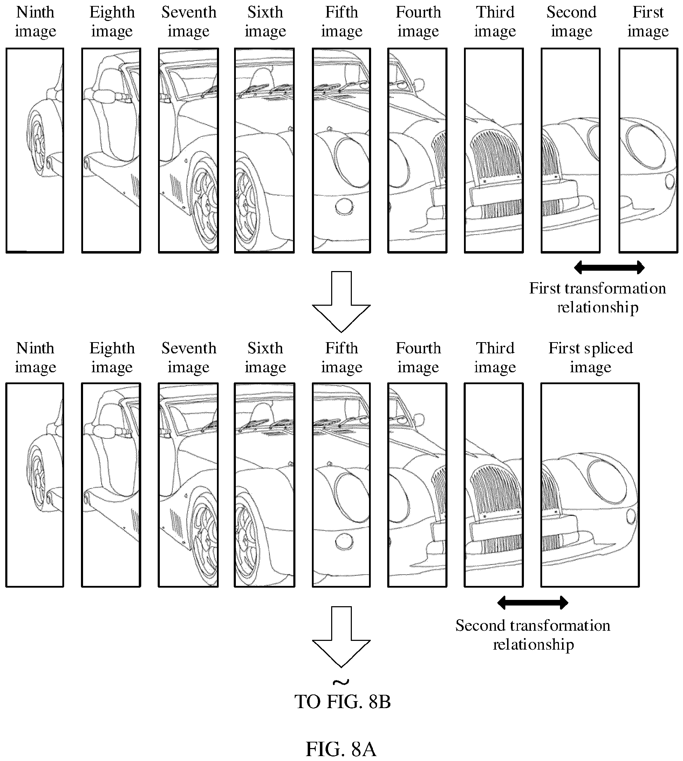

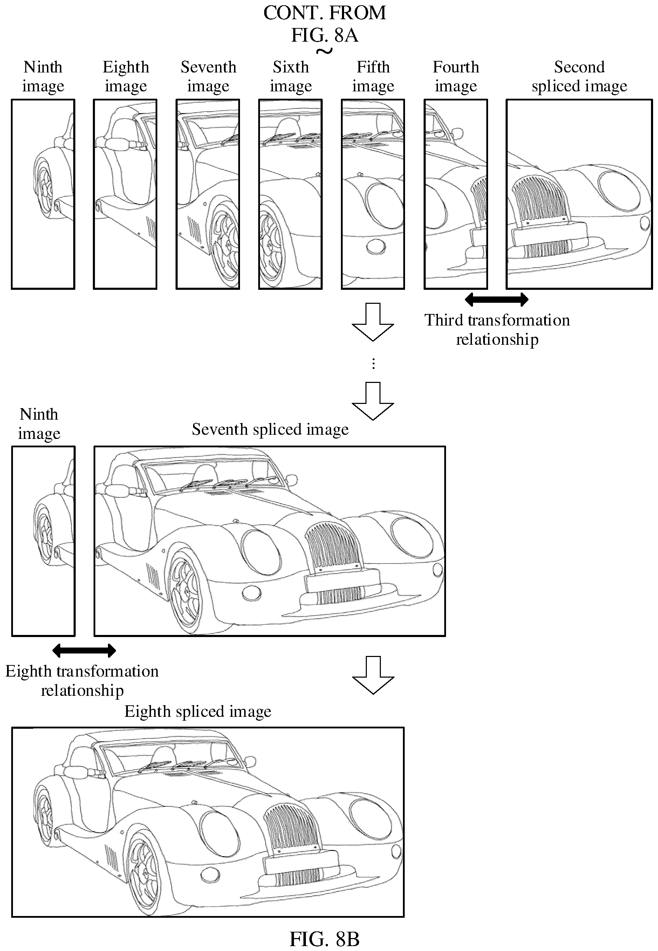

FIG. 8A and FIG. 8B show an example of performing image splicing on the second image sequence. The second image sequence shown in FIG. 8A and FIG. 8B includes nine images arranged based on the capturing time sequence. The nine images are in a one-to-one correspondence with nine capturing times. For example, a first image is captured at a first capturing time, a second image is captured at a second capturing time, and the rest may be deduced by analogy.

First, the first image and the second image are spliced based on a first transformation relationship to obtain a first spliced image; then the first spliced image and a third image are spliced based on a second transformation relationship to obtain a second spliced image; then the second spliced image and a fourth image are spliced based on a third transformation relationship to obtain a third spliced image; and the rest may be deduced by analogy. Finally, a seventh spliced image and a ninth image are spliced based on an eighth transformation relationship to obtain an eighth spliced image, that is, the spliced image that is of the target object and that is in the hyperspectral band.

This implementation may be used in a real-time image splicing scenario. When the target object is scanned, a transformation relationship of image splicing may be obtained while images are spliced into a final spliced image.

In a second possible implementation, the second image sequence includes T images arranged in the capturing time sequence, the T images are in a one-to-one correspondence with T capturing times, and a t^{th} image in the T images is captured at a t^{th} capturing time in the T capturing times. The image processing device may use two images as a group based on the capturing time sequence, and splice the images based on a transformation relationship between the two images. A first group of images may include a first image and a second image in the first image sequence, and a first transformation relationship may be used to perform image splicing on the first group of images; a second group of images may include the second image and a third image in the first image sequence, and a second transformation relationship may be used to perform image splicing on the second group of images; and the rest may be deduced by analogy until all images are spliced. In this way, a t^{th} transformation relationship may be used to perform image splicing on the t^{th} image and a (t+1)^{th} image in the T images, where 1≤t<T, T> 1, and both t and T are integers.

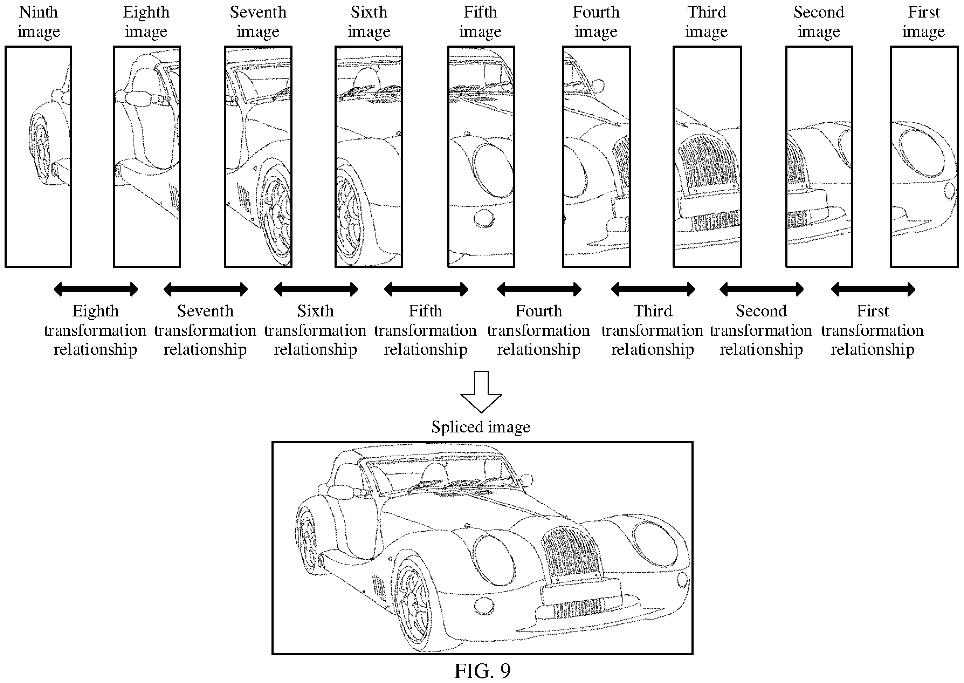

FIG. 9 shows another example of performing image splicing on the second image sequence. The second image sequence includes nine images arranged based on the capturing time sequence. The nine images are in a one-to-one correspondence with nine capturing times. For example, a first image is captured at a first capturing time, a second image is captured at a second capturing time, and the rest may be deduced by analogy.

In a possible splicing manner, the first image and the second image are first spliced based on a first transformation relationship to obtain a first spliced image; then the second image and a third image are spliced based on a second transformation relationship to obtain a second spliced image; and the rest may be deduced by analogy. Finally, an eighth image and a ninth image are spliced based on an eighth transformation relationship to obtain an eighth spliced image. Finally, the spliced image that is of the target object and that is in the hyperspectral band is obtained based on the foregoing eight spliced images.

In another possible splicing manner, the nine images are spliced into one spliced image at a time based on eight transformation relationships.

This implementation may be used in an offline image splicing scenario. First, line scanning is performed on the target object once to obtain images arranged in a time sequence. Then, a transformation relationship between two adjacent images is calculated. Finally, a spliced image of the target object is obtained.

In a third possible implementation, the second image sequence includes N images, and the N images are captured by performing a plurality of rounds of scanning on the target object in the scanning direction. The image processing device may use two images whose matching degree reaches a preset threshold as one group, and perform image splicing on the two images based on a transformation relationship between the two images. A first group of images may include two images, in the first image sequence, whose matching degree reaches the preset threshold; a second group of images may include another two images, in the first image sequence, whose matching degree reaches the preset threshold; and the rest may be deduced by analogy until image splicing is performed on all the two images whose matching degree reaches the preset threshold.

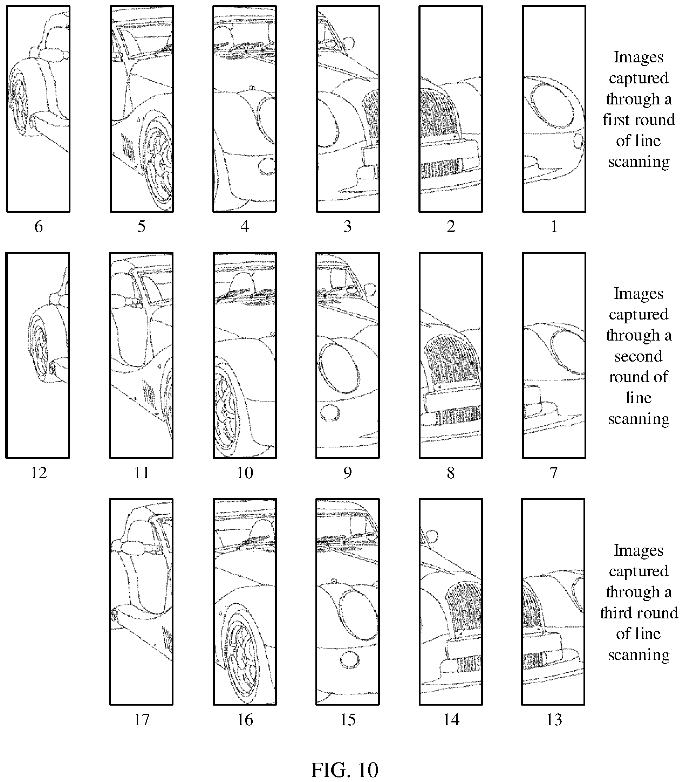

FIG. 10 shows still another example of performing image splicing on the second image sequence. The second image sequence includes 17 images, and the 17 images are captured by performing three rounds of line scanning on the target object. One round of line scanning includes one or more times of line scanning on the target object from one end to the other end, and images obtained in each round of line scanning are arranged in a time sequence. Images 1 to 6 are captured in a first round of line scanning, images 7 to 12 are captured in a second round of line scanning, and images 13 to 17 are captured in a third round of line scanning.

A matching degree between any two images may be calculated by using an image similarity algorithm, for example, a structural similarity (structural similarity, SSIM) algorithm. A specific algorithm to be used is not limited in this application.

Images whose matching degrees with an image 1 reach the preset threshold include an image 7 and an image 13; images whose matching degrees with an image 2 reach the preset threshold include an image 7, an image 8, an image 13, and an image 14; and the rest may be deduced by analogy.

Finally, a result of whether a matching degree between any two images reaches the preset threshold is obtained, as shown in the following Table 1.

**Table 1**

| | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| 1 | | | | | | | √ | | | | | | √ | | | | |
| 2 | | | | | | | √ | √ | | | | | √ | √ | | | |
| 3 | | | | | | | | √ | √ | | | | | √ | √ | | |
| 4 | | | | | | | | | √ | √ | | | | | √ | √ | |
| 5 | | | | | | | | | | √ | √ | | | | | √ | √ |
| 6 | | | | | | | | | | | √ | √ | | | | | √ |
| 7 | √ | √ | | | | | | | | | | | √ | | | | |
| 8 | | √ | √ | | | | | | | | | | √ | √ | | | |
| 9 | | | √ | √ | | | | | | | | | | √ | √ | | |
| 10 | | | | √ | √ | | | | | | | | | | √ | √ | |
| 11 | | | | | √ | √ | | | | | | | | | | √ | √ |
| 12 | | | | | | √ | | | | | | | | | | | √ |
| 13 | √ | √ | | | | | √ | √ | | | | | | | | | |
| 14 | | √ | √ | | | | | √ | √ | | | | | | | | |
| 15 | | | √ | √ | | | | | √ | √ | | | | | | | |
| 16 | | | | √ | √ | | | | | √ | √ | | | | | | |
| 17 | | | | | √ | √ | | | | | √ | √ | | | | | |

As shown in Table 1, there are 31 pairs of images whose matching degrees reach the preset threshold. Therefore, 31 transformation relationships may be obtained. Based on the 31 transformation relationships, the 17 images may be spliced into one spliced image. For a specific splicing manner, refer to the first or second possible implementation.

This implementation may be used in a scenario of the plurality of rounds of scanning. In this scenario, an image whose matching degree with a specific image reaches the preset threshold is not necessarily an image that is closest to the image in terms of time. For example, images whose matching degree with the image 1 reaches the preset threshold does not include the image 2, but include the image 7 and the image 13. Therefore, the images may be preferably selected for splicing by calculating a matching degree. This helps improve splicing effect of the images.

It should be understood that in the foregoing listed several possible implementations used for image splicing, application of the at least one transformation relationship to an image splicing process corresponds to a process of obtaining the at least one transformation relationship based on the first image sequence, and may be considered as an inverse process of the foregoing image splicing process. For brevity, a process of obtaining the at least one transformation relationship based on the first image sequence is not described in detail herein.

According to the image processing method provided in this application, an image sequence of the RGB spectral band may be obtained, and a spliced image that is of the target object and that is in the RGB spectral band and a transformation relationship used for image splicing are obtained based on the image sequence of the RGB spectral band. Then, images of an image sequence of another spectral band are spliced based on the transformation relationship for image splicing of the RGB spectral band. Because the current image processing algorithm has better effect in calculating the transformation relationship of RGB image splicing than in calculating the transformation relationship of hyperspectral image splicing, the transformation relationship for splicing of the RGB image is reused for splicing of the hyperspectral image. This can reduce the calculation amount, and can also make splicing effect of the hyperspectral image better.

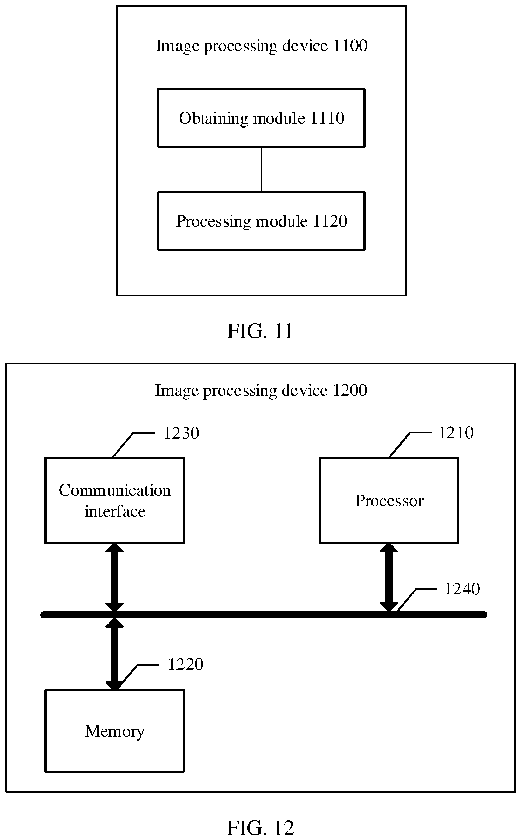

FIG. 11 is a block diagram of an image processing device according to an embodiment of this application. The device may correspond to the image processing device in the foregoing method embodiment, and is configured to implement a corresponding function of the image processing device. As shown in FIG. 11, the image processing device 1100 may include an obtaining module 1110 and a processing module 1120.

The obtaining module 1110 may be configured to obtain a first image sequence and a second image sequence, where the first image sequence includes a plurality of images that are of a hyperspectral band and that are captured by performing line scanning on a target object, and the second image sequence includes a plurality of images that are of a red-green-blue spectral band and that are captured by performing line scanning on the target object. The processing module 1120 may be configured to perform image splicing on the first image sequence based on at least one transformation relationship, to obtain a spliced image that is of the target object and that is in the hyperspectral band, where the at least one transformation relationship is obtained based on image splicing performed on the second image sequence, and the at least one transformation relationship indicates a transformation relationship between two images in the first image sequence.

Optionally, the processing module 1120 is further configured to perform image splicing on the first image sequence to obtain the at least one transformation relationship.

Optionally, the second image sequence includes a first image, a second image, and a third image. The at least one transformation relationship includes a first transformation relationship and a second transformation relationship. The processing module 1120 is specifically configured to perform image splicing on the third image and a fourth image based on the first transformation relationship, to obtain the spliced image that is of the target object and that is in the hyperspectral band. The fourth image is obtained by performing image splicing on the first image and the second image based on the second transformation relationship.

Optionally, the second image sequence includes a first image, a second image, and a third image. The at least one transformation relationship includes a first transformation relationship and a second transformation relationship. The processing module 1120 is specifically configured to: perform image splicing on the first image and the second image based on the first transformation relationship, and perform image splicing on the second image and the third image based on the second transformation relationship, to obtain the spliced image that is of the target object and that is in the hyperspectral band.

Optionally, the first image, the second image, and the third image are arranged in a capturing time sequence.

Optionally, the at least one transformation relationship includes a first transformation relationship. The obtaining module 1110 is specifically configured to obtain two images, in the second image sequence, whose matching degree reaches a preset threshold. The processing module 1120 is specifically configured to perform, based on the first transformation relationship, image splicing on the two images, in the second image sequence, whose matching degree reaches the preset threshold, to obtain the spliced image that is of the target object and that is in the hyperspectral band.

Optionally, the second image sequence is obtained by performing a plurality of rounds of line scanning on the target object in a scanning direction.

FIG. 12 is another block diagram of an image processing device according to an embodiment of this application. As shown in FIG. 12, the device 1200 may include at least one processor 1210, and may be configured to implement an image processing function in the foregoing method embodiment. For details, refer to detailed descriptions in the method examples. Details are not described herein again.

The device 1200 may further include a memory 1220, configured to store program instructions and/or data. The memory 1220 is coupled to the processor 1210. The coupling in this application is indirect coupling or communication connection between apparatuses, units, or modules, and may be in an electrical form, a mechanical form, or another form, and is used for information exchange between the apparatuses, the units, or the modules. The processor 1210 may operate in coordination with the memory 1220. The processor 1210 may execute the program instructions stored in the memory 1220. At least one of the at least one memory may be included in the processor.

The device 1200 may further include a communication interface 1230, configured to communicate with another device through a transmission medium, so that an apparatus in the apparatus 1200 can communicate with the another device. The communication interface 1230 may be, for example, a transceiver, an interface, a bus, a circuit, or an apparatus that can implement receiving and sending functions. The processor 1210 may receive and send data and/or information by using the communication interface 1230, and is configured to implement the image processing method in an embodiment corresponding to FIG. 7.

A specific connection medium between the processor 1210, the memory 1220, and the communication interface 1230 is not limited in this application. In this application, in FIG. 12, the processor 1210, the memory 1220, and the communication interface 1230 are connected through the bus 1240. The bus 1240 is represented by using a thick line in FIG. 12, and a connection manner between other components is merely described as an example and is not limited thereto. The bus may be classified into an address bus, a data bus, a control bus, and the like. For ease of representation, only one thick line represents the bus in FIG. 12, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the method, steps, and logical block diagrams disclosed in this application. The general purpose processor may be a microprocessor, any conventional processor, or the like. The steps of the method disclosed with reference to this application may be directly performed and completed by a hardware processor, or may be performed and completed by a combination of hardware in the processor and a software module.

According to the method provided in this application, this application further provides a computer-readable storage medium. The computer-readable storage medium stores program code. When the program code is run on a computer, the computer is enabled to perform the image processing method in the embodiment shown in FIG. 7.

According to the method provided in this application, this application further provides a computer program product. The computer program product includes: computer program code. When the computer program code is run on a computer, the computer is enabled to perform the image processing method in the embodiment shown in FIG. 7.

All or some of the technical solutions provided in this application may be implemented by using software, hardware, firmware, or any combination thereof. When software is used to implement the technical solutions, all or some of the technical solutions may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An image sensor, comprising:
an optical signal obtaining module, configured to obtain an optical signal of a red-green-blue spectral band and an optical signal of a hyperspectral band from a received optical signal, and convert the optical signal of the red-green-blue spectral band and the optical signal of the hyperspectral band into an electrical signal, wherein the optical signal obtaining module comprises a first optical structure corresponding to the red-green-blue spectral band and a second optical structure corresponding to the hyperspectral band, the first optical structure is configured to obtain the optical signal of the red-green-blue spectral band from the optical signal, and the second optical structure is configured to obtain the optical signal of the hyperspectral band from the optical signal; and
a communication interface, configured to output the electrical signal.

2. The image sensor according to claim 1, wherein the first optical structure comprises a light filtering structure, and the second optical structure comprises a light splitting structure, wherein
the light splitting structure is configured to split the optical signal to obtain the optical signal of the hyperspectral band; and
the light filtering structure is configured to filter the optical signal to obtain the optical signal of the red-green-blue spectral band.

3. The image sensor according to claim 2, wherein the light splitting structure comprises one or more of the following: an interference thin film, a Fabry-Perot cavity, a waveguide grating, a nano-hole, or a metal medium.

4. The image sensor according to claim 1, wherein both the first optical structure and the second optical structure comprise a light filtering structure, and the light filtering structure is configured to filter the optical signal to obtain the optical signal of the hyperspectral band and the optical signal of the red-green-blue spectral band.

5. The image sensor according to any one of claims 2 to 4, wherein the red-green-blue spectral band comprises a plurality of spectral sub-bands, and regions that are in the light filtering structure and that correspond to the plurality of spectral sub-bands are arranged in a Bayer pattern.

6. The image sensor according to any one of claims 2 to 4, wherein the red-green-blue spectral band comprises a plurality of spectral sub-bands, a region that is in the light filtering structure and that corresponds to each spectral sub-band is strip-shaped, and regions corresponding to different spectral sub-bands are arranged in parallel in a scanning direction.

7. The image sensor according to any one of claims 2 to 6, wherein the light filtering structure is prepared by using a chemical dye.

8. The image sensor according to any one of claims 1 to 7, wherein the first optical structure and the second optical structure are located in different planes, or are located in a same plane.

9. The image sensor according to any one of claims 1 to 8, wherein the optical signal obtaining module further comprises a photosensitive element, configured to sense the optical signals received from the first optical structure and the second optical structure, to obtain the electrical signal.

10. The image sensor according to any one of claims 1 to 9, wherein the hyperspectral band comprises a visible spectral band or an infrared spectral band.

11. An imaging module, comprising:
an imaging lens, and
the image sensor according to any one of claims 1 to 10.

12. An image capturing device, comprising the imaging module according to claim 11.

13. The device according to claim 12, wherein the device further comprises a controller, configured to control the optical signal obtaining module to perform line scanning on a target object in a preset scanning direction, to obtain images of a plurality of scanning regions of the target object.

14. An image processing method, comprising:
obtaining a first image sequence and a second image sequence, wherein the first image sequence comprises a plurality of images that are of a red-green-blue spectral band and that are captured by performing line scanning on a target object, and the second image sequence comprises a plurality of images that are of a hyperspectral band and that are captured by performing line scanning on the target object; and
performing image splicing on the second image sequence based on at least one transformation relationship, to obtain a spliced image that is of the target object and that is in the hyperspectral band, wherein the at least one transformation relationship is obtained based on image splicing performed on the first image sequence, and the at least one transformation relationship indicates a transformation relationship between two images in the first image sequence.

15. The method according to claim 14, wherein before the performing image splicing on the second image sequence based on a transformation relationship between images, the method further comprises:
performing image splicing on the first image sequence to obtain the at least one transformation relationship.

16. The method according to claim 14 or 15, wherein the second image sequence comprises a first image, a second image, and a third image, the at least one transformation relationship comprises a first transformation relationship and a second transformation relationship, and the performing image splicing on the second image sequence based on at least one transformation relationship, to obtain a spliced image that is of the target object and that is in the hyperspectral band comprises:
performing image splicing on the third image and a fourth image based on the first transformation relationship, to obtain the spliced image that is of the target object and that is in the hyperspectral band, wherein the fourth image is obtained by performing image splicing on the first image and the second image based on the second transformation relationship.

17. The method according to claim 14 or 15, wherein the second image sequence comprises a first image, a second image, and a third image, the at least one transformation relationship comprises a first transformation relationship and a second transformation relationship, and the performing image splicing on the second image sequence based on at least one transformation relationship, to obtain a spliced image that is of the target object and that is in the hyperspectral band comprises:
performing image splicing on the first image and the second image based on the first transformation relationship, and performing image splicing on the second image and the third image based on the second transformation relationship, to obtain the spliced image that is of the target object and that is in the hyperspectral band.

18. The method according to claim 16 or 17, wherein the first image, the second image, and the third image are arranged in a capturing time sequence.

19. The method according to claim 14 or 15, wherein the at least one transformation relationship comprises a first transformation relationship, and the performing image splicing on the second image sequence based on at least one transformation relationship, to obtain a spliced image that is of the target object and that is in the hyperspectral band comprises:
obtaining two images, in the second image sequence, whose matching degree reaches a preset threshold; and
performing, based on the first transformation relationship, image splicing on the two images, in the second image sequence, whose matching degree reaches the preset threshold, to obtain the spliced image that is of the target object and that is in the hyperspectral band.

20. The method according to claim 19, wherein the second image sequence is obtained by performing a plurality of rounds of line scanning on the target object in a scanning direction.

21. An image processing device, comprising:
an obtaining module, configured to obtain a first image sequence and a second image sequence, wherein the first image sequence comprises a plurality of images that are of a hyperspectral band and that are captured by performing line scanning on a target object, and the second image sequence comprises a plurality of images that are of a red-green-blue spectral band and that are captured by performing line scanning on the target object; and
a processing module, configured to perform image splicing on the first image sequence based on at least one transformation relationship, to obtain a spliced image that is of the target object and that is in the hyperspectral band, wherein the at least one transformation relationship is obtained based on image splicing performed on the second image sequence, and the at least one transformation relationship indicates a transformation relationship between two images in the first image sequence.

22. The device according to claim 21, wherein the processing module is further configured to perform image splicing on the first image sequence to obtain the at least one transformation relationship.

23. An image processing device, comprising a memory and a processor, wherein
the memory is configured to store a computer program; and
the processor is configured to invoke and execute the computer program, to enable the apparatus to perform the method according to any one of claims 14 to 20.

24. A computer-readable storage medium, wherein the computer-readable storage medium stores a computer program, and when the computer program is executed by a processor, the method according to any one of claims 14 to 20 is implemented.

25. A computer program product, comprising a computer program, wherein when the computer program is run, the method according to any one of claims 14 to 20 is implemented.
